# EUROPEAN PATENT SPECIFICATION

(11) **EP 3 462 355 B1**
(45) Date of publication and mention of the grant of the patent: **02.09.2020**
(21) Application number: 18184169.3
(22) Date of filing: 11.02.2014
(51) Int. Cl.: G06F 21/53, H04L 29/08

(54) **RESILIENT PORTALS THROUGH SANDBOXING**
ELASTISCHE PORTALE DURCH SANDBOXING
PORTAILS ÉLASTIQUES PAR MISE EN BAC À SABLE

(30) Priority: 11.02.2013 US 201361763361 P; 10.09.2013 US 201314023092
(43) Date of publication of application: 03.04.2019
(62) Divisional of application: 14749687.1
(73) Proprietor: Liferay, Inc., Diamond Bar, CA 91765 (US)
(72) Inventor: HAN, Michael C., Diamond Bar California, 91765 (US); ZHOU, Shuyang, Diamond Bar California, 91765 (US)
(74) Representative: Haseltine Lake Kempner LLP

(56) References cited:
- US-A1- 2005 177 635
- US-A1- 2007 136 579
- US-A1- 2008 120 343
- US-A1- 2008 295 164

## Description

### Cross-Reference to Related Applications

This patent application claims the benefit of U.S. provisional patent application 61/763,361, filed February 11, 2013.

### Background of the Invention

The present invention relates to the field of sites and resources accessed over a network, and more specifically, to providing methods and systems for portals.

There are a variety of digital resources, information, and other tools that assist people in doing their jobs better. However, these tools can be spread across many different organizations, branches, divisions, departments, computers, and networks (e.g., Internet, intranets, or other networks) that hinder their accessibility. Particularly for employees of large organizations, it may be difficult to find in an integrated single tool that provides access to a wide variety of resources in one place.

A portal is a framework that helps consolidate these resources. For example, a portal can include a website that provides a point for displaying content from multiple data sources and tools. Some of these data sources include an organization's financial transactions, reporting, human resources information, or other services and information.

Portals can be composed of portlets. These portlets provide access to web-based content, applications, and other services. For instance, a portlet can be dedicated to filing expense reports, managing documents, or viewing reports of sales information. A portal can host (or use) many individual portlets and a user may customize their own portal page by adding portlets to their page depending on their needs and requirements.

Since portals can be crucial to a properly functioning organization, portals are often required to have high availability. An example of this are portals for critical services such as healthcare claims filing. These critical portals often require availability and uptimes of 99.999 percent or greater. However, the performance and stability of a single portlet on a portal will impact the performance and stability of the entire portal. Thus, portal administrators must take extreme care in deploying portlets to avoid downtime and other adverse effects.

US 2008/0120343 discloses a method and respective system for binding a portlet into a web portal infrastructure comprising at least one portal and a plurality of portlets. US 2005/0177635 discloses a system and method for allowing web-based applications to run in a controlled environment. US 2008/0295164 discloses a method, system and computer program storage device for providing security in a mashup comprised of an agglomeration of a plurality of portlets.

Therefore, there is a need to provide an improved method and system for providing portals that are robust and flexible.

### Brief Summary of the Invention

A portal system uses sandboxing to increase reliability of the portal. The portal can be centrally managed to maintain reliability of portal by compartmentalizing (e.g., sandboxing, virtual machines, or other techniques) portlets of the portal system. This can help portal administrators reduce the impact any single portlet may have on the resiliency of the overall portal, while maintaining core portal functionality. For example, if a portlet or group of portlets becomes unstable, these portlets will not impact the overall availability of the portal.

The system provides a system and method allowing a portal to execute associated portlets on one or multiple portlet sandbox containers. The sandboxed portlet can be executing on a virtual machine (e.g., system or process virtual machine), physically separate machine, or other method that allows executing portlets that prevent errors from one portlet to propagate to other portlets. These execute separately from the portal (or master portal process), thus shielding the portal from potentially destabilizing events originating from individual portlets. Each portlet sandbox container (or sandbox) can execute one or more portlets.

In an implementation, the system uses one or more sandboxes. This can be implemented using, for example, a virtual machine. A virtual machine is a software-based version of a process (or application) executing on a computer. For example, the system can support process-based virtual machines or managed runtime environments (or MRE). In this example, the system can have one or more process-based virtual machines executing on a computer. The process-based virtual machine abstracts details of the underlying hardware on the computer or operating system. A process-based virtual machine uses higher-level abstraction (e.g., programming language source files, bytecode, or other language), as opposed to lower-level abstraction (e.g., instruction set programming, machine code, or other code) used for computer-based virtual machines. The system can include an interpreter for translating the higher-level programming language into lower-level computer instructions. Some popular virtual machines that can be used with the system include the Java virtual machine, Parrot virtual machine, .NET framework (or Common Language Runtime), or other popular virtual machines.

Some types of destabilizing events the system can recover from or prevent from causing system failure are memory leaks, coding errors or inefficiencies (e.g., tight code loops that lead to excessive central processing unit or CPU utilization), JVM security manager violations, or other portlet errors. If one or more of these events occurs in a single portal process hosting portlets, as opposed to multiple sandboxes hosting separate portlets, this could cause an entire portal to crash and become unavailable to process end user requests. Portal administrators may configure, via administration user interfaces or configuration files, how many portlet sandbox containers a master portal process may spawn and control, which portlets will run in which portlet sandbox container, and manage and tune one or more of the portlet sandbox container processes.

In some systems, portal or system administrators manage portals for users of a portal system. A portal administrator can deploy portlets in the portal and configure the portlets via a configuration user interface. Administrators may configure settings, such as limiting rights to use specific portlets and which portal pages a portlet will be displayed. Portlets may come from developers known to the portal administrators (e.g., contracted developers, programmers working with the system administrator, or other) or from third-party developers. An advantage of the system is that portal administrators may easily quarantine certain portlets from the master portal process. Thus, if these portlets cause any stability and performance issues, these issues will not lead to instability in the overall portal.

In an implementation, the method includes receiving a first request from a user to a portal web page, where a first portlet of the portal web page is managed by a master portal process and the first request includes a first portlet identifier indicating that it relates to the first portlet. At the master portal process, the system processes the user's first request including: performing a lookup using the first portlet identifier; based on the lookup, determining a first sandbox executes a first portlet executable corresponding to the first portlet; transferring the first request to the first sandbox for operation; and receiving an updated render of the first portlet at the master portal process based on the first request. The system includes generating a response for the user's first request including: assembling output for a plurality of portlets on the portal web page, including the updated render of the first portlet; and rendering an updated portal web page.

The system can include receiving an error indication from the first portlet; and terminating the first sandbox executing the first portlet executable. The master portal process can continue to execute after the terminating the first sandbox. The error indication can indicate a nonresponsive state or an excessive computing resource utilization of the first portlet. The first request can relate to exactly one portlet of the portal web page. The system can include where the master portal process executes on a first computer separate from a second computer hosting the first sandbox.

In various implementations, the system includes: at the master portal process, processing a user's second request where the second request includes a second portlet identifier indicating that it relates to the first portlet and further includes: performing a lookup using the second portlet identifier; based on the lookup, determining the first sandbox executes the first portlet executable corresponding to the first portlet; transferring the second request to the first sandbox for operation; and receiving an updated render of the first portlet at the master portal process based on the second request.

The system can include: at the master portal process, processing a user's second request where the second request includes a second portlet identifier indicating that it relates to a second portlet managed by the master portal process and further includes: performing a lookup using the second portlet identifier; based on the lookup, determining a first sandbox executes the second portlet executable corresponding to the second portlet; transferring the second request to the first sandbox for operation; and receiving an updated render of the second portlet at the master portal process based on the second request.

The system can include: at the master portal process, processing a user's second request where the second request includes a second portlet identifier indicating that it relates to a second portlet managed by the master portal process and further includes: performing a lookup using the second portlet identifier; based on the lookup, determining a second sandbox executes the second portlet executable corresponding to the second portlet; transferring the second request to the second sandbox for operation; and receiving an updated render of the second portlet at the master portal process based on the second request. The first sandbox can include an interpreter, where the interpreter is used in executing the first portlet executable of the first portlet. The first portlet executable can be in a bytecode format.

In an implementation, the system includes: receiving a request from a first user at a first portlet of a portal web page managed by a master portal process; launching a first sandbox including the first portlet; at the master portal process, processing the first user's request by sending the first user's request at the first portlet to the first sandbox for execution; at the master portal process, monitoring execution of the first sandbox, where the monitoring is capable of detecting at least one of a plurality of conditions of the first sandbox, the plurality of conditions including a first condition including unresponsiveness of the first portlet; and upon detecting a condition of the plurality of conditions of the first sandbox, causing a termination of the first sandbox, launching a second sandbox, and sending the first user's request of the first portlet to the second sandbox for execution, where the first sandbox is terminated without a termination of the master portal process, the second sandbox is different from the first sandbox, and the second sandbox includes the first portlet.

The system can include upon detecting a condition of the plurality of conditions of the first sandbox, providing an indication that the condition has occurred. The monitoring execution of the first sandbox can include monitoring a heartbeat connection between the first sandbox and the master portal process.

The system can include, before the causing the termination of the first sandbox, the first sandbox includes the first portlet and a second portlet and, after the causing a termination of the first sandbox, the second sandbox includes the first portlet and the second portlet.

In an implementation, the system includes: receiving a request from a first user at a portal web page for a first portlet managed by a master portal process; at the master portal process, processing the first user's request by determining that the first portlet has been configured to execute on a first sandbox, and sending the first user's request at the first portlet to the first sandbox for execution, where the first sandbox includes an executable of the first portlet that will execute the first user's response; at the first sandbox containing the executable of the first portlet, processing the first user's request and returning a result to the master portal process; and at the master portal process, assembling a response for the first user's request including the result from the executable of the first portlet at the first sandbox and returning the response at the portal web page.

In various implementations, the system includes an executable configured to execute on a second sandbox. The second portlet can include an executable configured to execute on the first sandbox.

Other objects, features, and advantages of the invention will become apparent upon consideration of the following detailed description and the accompanying drawings, in which like reference designations represent like features throughout the figures.

### Brief Description of the Drawings

Figure 1 shows a simplified block diagram of a client-server system and network in which an embodiment of the invention may be implemented.
Figure 2 shows a more detailed diagram of an exemplary client or computer which may be used in an implementation of the invention.
Figure 3 shows a system block diagram of a client computer system used to execute application programs such as a web browser or tools for implementing robust and flexible portals according to the invention.
Figure 4 shows a sample flow of the system.
Figure 5 shows a system diagram.
Figure 6 shows an example of a computer that can host the system.
Figure 7 shows an implementation of the system deployed on multiple servers.
Figure 8 shows a flow of processing a user's request in the system.
Figure 9 shows a flow of how a portal user's form submission is processed in the system.
Figure 10 shows a flow of how a portal user's request for a resource will be processed in the system.
Figure 11 shows how a portal user's form submission can be processed in the system when portlets fire events.

### Detailed Description of the Invention

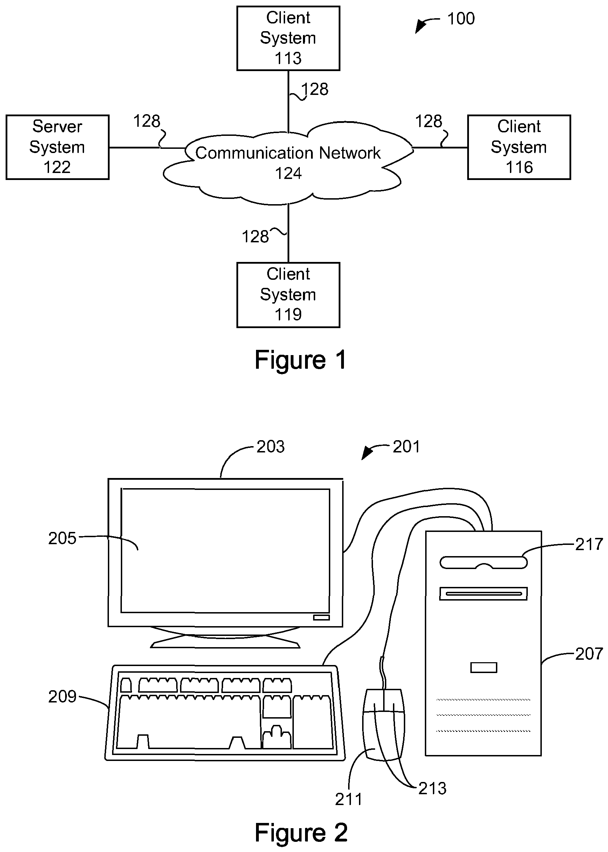

Figure 1 is a simplified block diagram of a distributed computer network 100 incorporating an embodiment of the present invention. Computer network 100 includes a number of client systems 113, 116, and 119, and a server system 122 coupled to a communication network 124 via a plurality of communication links 128. Communication network 124 provides a mechanism for allowing the various components of distributed network 100 to communicate and exchange information with each other.

Communication network 124 may itself be comprised of many interconnected computer systems and communication links. Communication links 128 may be hardwire links, optical links, satellite or other wireless communications links, wave propagation links, or any other mechanisms for communication of information. Various communication protocols may be used to facilitate communication between the various systems shown in figure 1. These communication protocols may include TCP/IP, HTTP protocols, wireless application protocol (WAP), vendor-specific protocols, customized protocols, and others. While in one embodiment, communication network 124 is the Internet, in other embodiments, communication network 124 may be any suitable communication network including a local area network (LAN), a wide area network (WAN), a wireless network, an intranet, a private network, a public network, a switched network, and combinations of these, and the like.

Distributed computer network 100 in figure 1 is merely illustrative of an embodiment incorporating the present invention and does not limit the scope of the invention as recited in the claims. One of ordinary skill in the art would recognize other variations, modifications, and alternatives. For example, more than one server system 122 may be connected to communication network 124. As another example, a number of client systems 113, 116, and 119 may be coupled to communication network 124 via an access provider (not shown) or via some other server system.

Client systems 113, 116, and 119 typically request information from a server system which provides the information. For this reason, server systems typically have more computing and storage capacity than client systems. However, a particular computer system may act as both as a client or a server depending on whether the computer system is requesting or providing information. Additionally, although aspects of the invention has been described using a client-server environment, it should be apparent that the invention may also be embodied in a stand-alone computer system.

Server 122 is responsible for receiving information requests from client systems 113, 116, and 119, performing processing required to satisfy the requests, and for forwarding the results corresponding to the requests back to the requesting client system. The processing required to satisfy the request may be performed by server system 122 or may alternatively be delegated to other servers connected to communication network 124.

According to the teachings of the present invention, client systems 113, 116, and 119 enable users to access and query information stored by server system 122. In a specific embodiment, a "web browser" application executing on a client system enables users to select, access, retrieve, or query information stored by server system 122. Examples of web browsers include the Internet Explorer browser program provided by Microsoft Corporation, and the Firefox browser provided by Mozilla, and others.

Figure 2 shows an exemplary client system of the present invention. In an embodiment, a user interfaces with the system through a computer workstation system, such as shown in figure 2. Figure 2 shows a computer system 201 that includes a monitor 203, screen 205, enclosure 207 (may also be referred to as a system unit, cabinet, or case), keyboard or other human input device 209, and mouse or other pointing device 211. Mouse 211 may have one or more buttons such as mouse buttons 213.

Enclosure 207 houses familiar computer components, some of which are not shown, such as a processor, memory, mass storage devices 217, and the like. Mass storage devices 217 may include mass disk drives, floppy disks, magnetic disks, optical disks, magnetooptical disks, fixed disks, hard disks, CD-ROMs, recordable CDs, DVDs, recordable DVDs (e.g., DVD-R, DVD+R, DVD-RW, DVD+RW, HD-DVD, or Blu-ray Disc), flash and other nonvolatile solid-state storage (e.g., USB flash drive), battery-backed-up volatile memory, tape storage, reader, and other similar media, and combinations of these.

A computer-implemented or computer-executable version or computer program product of the invention may be embodied using, stored on, or associated with computer-readable medium. A computer-readable medium may include any medium that participates in providing instructions to one or more processors for execution. Such a medium may take many forms including, but not limited to, nonvolatile, volatile, and transmission media. Nonvolatile media includes, for example, flash memory, or optical or magnetic disks. Volatile media includes static or dynamic memory, such as cache memory or RAM. Transmission media includes coaxial cables, copper wire, fiber optic lines, and wires arranged in a bus. Transmission media can also take the form of electromagnetic, radio frequency, acoustic, or light waves, such as those generated during radio wave and infrared data communications.

For example, a binary, machine-executable version, of the software of the present invention may be stored or reside in RAM or cache memory, or on mass storage device 217. The source code of the software of the present invention may also be stored or reside on mass storage device 217 (e.g., hard disk, magnetic disk, tape, or CD-ROM). As a further example, code of the invention may be transmitted via wires, radio waves, or through a network such as the Internet.

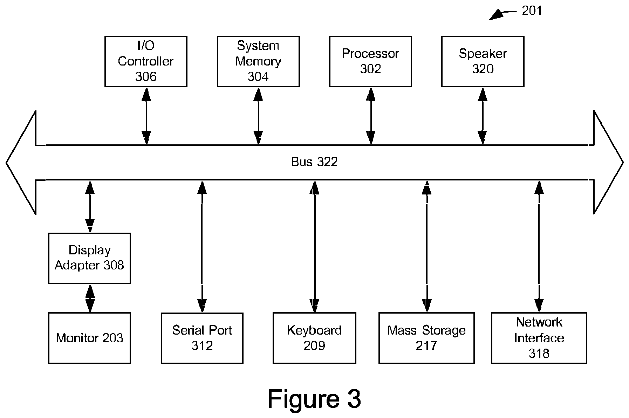

Figure 3 shows a system block diagram of computer system 201 used to execute the software of the present invention. As in figure 2, computer system 201 includes monitor 203, keyboard 209, and mass storage devices 217. Computer system 501 further includes subsystems such as central processor 302, system memory 304, input/output (I/O) controller 306, display adapter 308, serial or universal serial bus (USB) port 312, network interface 318, and speaker 320. The invention may also be used with computer systems with additional or fewer subsystems. For example, a computer system could include more than one processor 302 (i.e., a multiprocessor system) or a system may include a cache memory.

Arrows such as 322 represent the system bus architecture of computer system 201. However, these arrows are illustrative of any interconnection scheme serving to link the subsystems. For example, speaker 320 could be connected to the other subsystems through a port or have an internal direct connection to central processor 302. The processor may include multiple processors or a multicore processor, which may permit parallel processing of information. Computer system 201 shown in figure 2 is but an example of a computer system suitable for use with the present invention. Other configurations of subsystems suitable for use with the present invention will be readily apparent to one of ordinary skill in the art.

Computer software products may be written in any of various suitable programming languages, such as C, C++, C#, Pascal, Fortran, Perl, Matlab (from MathWorks, www.mathworks.com), SAS, SPSS, JavaScript, AJAX, Java, Erlang, and Ruby on Rails. The computer software product may be an independent application with data input and data display modules. Alternatively, the computer software products may be classes that may be instantiated as distributed objects. The computer software products may also be component software such as Java Beans (from Sun Microsystems) or Enterprise Java Beans (EJB from Sun Microsystems).

An operating system for the system may be one of the Microsoft Windows● family of operating systems (e.g., Windows 95, 98, Me, Windows NT, Windows 2000, Windows XP, Windows XP x64 Edition, Windows Vista, Windows 7, Windows, 8, Windows CE, Windows Mobile, Windows RT), Symbian OS, Tizen, Linux, HP-UX, UNIX, Sun OS, Solaris, Mac OS X, Apple iOS, Google Android, Alpha OS, AIX, IRIX32, or IRIX64. Other operating systems may be used. Microsoft Windows is a trademark of Microsoft Corporation.

Furthermore, the computer may be connected to a network and may interface to other computers using this network. The network may be an intranet, internet, or the Internet, among others. The network may be a wired network (e.g., using copper), telephone network, packet network, an optical network (e.g., using optical fiber), or a wireless network, or any combination of these. For example, data and other information may be passed between the computer and components (or steps) of a system of the invention using a wireless network using a protocol such as Wi-Fi (IEEE standards 802.11, 802.11a, 802.11b, 802.11e, 802.11g, 802.11i, 802.1 In, 802.11ac, and 802.11ad, just to name a few examples), near field communication (NFC), radio-frequency identification (RFID), mobile or cellular wireless (e.g., 2G, 3G, 4G, 3GPP LTE, WiMAX, LTE, LTE Advanced, Flash-OFDM, HIPERMAN, iBurst, EDGE Evolution, UMTS, UMTS-TDD, 1xRDD, and EV-DO). For example, signals from a computer may be transferred, at least in part, wirelessly to components or other computers.

In an embodiment, with a web browser executing on a computer workstation system, a user accesses a system on the World Wide Web (WWW) through a network such as the Internet. The web browser is used to download web pages or other content in various formats including HTML, XML, text, PDF, and postscript, and may be used to upload information to other parts of the system. The web browser may use uniform resource identifiers (URLs) to identify resources on the web and hypertext transfer protocol (HTTP) in transferring files on the web.

A portal platform is generally a software platform for building web sites and web applications. Some specific example of portal platform software includes the Liferay Portal, Liferay Social Office, and other products by Liferay. *See* www.liferay.com for more information. This published content includes web site pages, user guides and manuals, white papers, and other on-line and paper publications and documentation.

Some specific flows for determining a technique of the invention are presented below, but it should be understood that the invention is not limited to the specific flows and steps presented. A flow of the invention may have additional steps (not necessarily described in this application), different steps which replace some of the steps presented, fewer steps or a subset of the steps presented, or steps in a different order than presented, or any combination of these. Further, the steps in other implementations of the invention may not be exactly the same as the steps presented and may be modified or altered as appropriate for a particular application or based on the data.

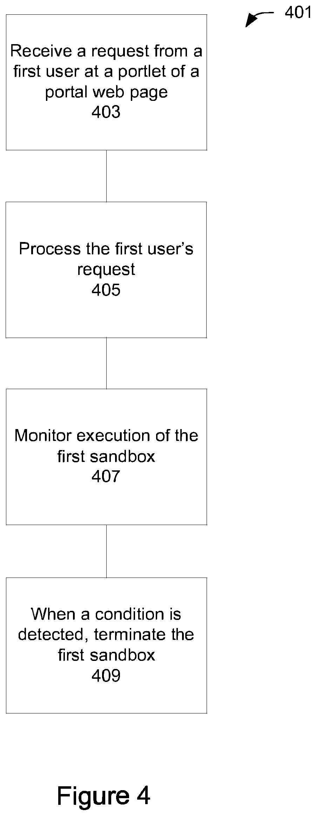

Figure 4 shows a sample flow 401 of the system. In a step 403, the system receives a request from a first user at a portlet of a portal web page. This portal web page can be a business portal, organization portal, personal portal, web application, or any other portal. The portal web page includes portlets. The master portal process can be a process executing on a computer, associated with one or more portlets executing on the portal web page.

A request can mean different things, depending on the type of portlet. For example, in an organization, a user from a human resources department interacts with portlet (e.g., user directory listing portlet) to search for a person in their company. Another user from a finance group interacts with another portlet (e.g., expenses tracking portlet) to enter reimbursable expenses into the system. Some other types of portlets include: content management system (e.g., web publishing, document and image management, web site tools), collaboration tools, social networking, and many other types of portlets.

The system can also support multiple users, accessing the system using different devices. For example, if the portal is an enterprise portal, the first and second users can be from the same organization or other users that need access to information of the organization (e.g., contractors, suppliers, or other).

In a step 405, the system processes the first user's request. For example, the first user's request can be for a first portlet executing in a sandbox. The system can then analyze the request, determine the request was made to the first portlet, then have the request transferred to the sandbox where the first portlet is executing for further processing by the first portlet.

In a step 407, the system monitors execution of the first sandbox. This can be done by a variety of ways, such as those described elsewhere in this application. The system can monitor for a variety of conditions of the first sandbox, to determine its health. Some conditions include whether the first portlet is unresponsive or if the first portlet is consuming excessive resources.

In a step 409, when a condition is detected, the system can terminate the first sandbox. The first portlet, which was hosted on the first sandbox, can also terminated. The termination can be automatic by the master portal process based on a set of predetermined rules (with options or parameters set by a system administrator), such as excessive resources above a first threshold level or unresponsive portlet or sandbox beyond a certain first time period.

Or the termination can be by the system administrator. For example, when the excessive resource utilitization is below the first threshold level, but above a second threshold level, the master portal process can send the system administrator a warning or other message (e.g., via console message, SMS message, e-mail, or other messaging), and the system administrator is presented an option on a system administration screen (e.g., button or menu option to terminate for a listing of portlets or sandboxes with excessive resource utilization) from which the admin can terminate a sandbox and its accompanying portlets. Similarly, messages can be sent to the system administrator for unresponsive portlets or sandboxes too. Then the system administrator can make the decision whether to terminate a sandbox.

After a sandbox is terminated (e.g., either automatically or by the system administrator), a second sandbox is started, and a new instance of the first portlet is launched on the second sandbox. When the first sandbox is terminated, the master portal process is unaffected (e.g., it does not have to terminate).

In an implementation, the system includes an enterprise portal. The enterprise portal allows users to integrate information across tools and data from within an organization or with information from trusted sources. The enterprise portal can include a variety of features, such as support for de-centralized content contribution and content management. This allows easier collaboration for content in the organization such as allowing multiple persons to access and edit information of the organization, while ensuring everyone is accessing the latest version of the content. An additional nonexhaustive list of features of the enterprise portal that can be included with the system includes:

*Single Sign-On.* The system provides single sign-on capabilities between their users and various other systems within and outside of the enterprise. This requires a user to authenticate once with the portal system and grants access to other related systems.

*Integration.* The system connects functions and data from multiple systems into new components or portlets or web parts, or any combination, with an integrated navigation between these components.

*Federation.* The system integrates content provided by other portals, typically through the use of Web Services for Remote Portlets (WSRP) or similar technologies.

*Customization.* The system allows users to customize the look and feel of their environment. Customers who are using Enterprise Information Portals (EIPs) can edit and design their own portals. For example, a user can choose the specific content and services they prefer. Also, the system allows the ability to prioritize most appropriate content based on attributes of the user and metadata of the available content.

*Personalization.* The system can match content to users. Based on a user profile, personalization uses rules to match the "services," or content, to the specific user. This is in contrast to customization, which is in hands of the end user, while personalization is not. Personalization is often based on your role or job function within the portal context.

*Access Control.* The system can limit specific types of content and services users have access to. For example, a company's proprietary information can be entitled for only company employee access. The system can further specify users or divisions that can access specific content and services. This access rights may be provided by a portal administrator or by a provisioning process. Access control lists manage the mapping between portal content and services over the portal user base.

*Enterprise Search.* The system can allow enterprise-wide searches of content. This can be a single-search tool that searches multiple content repositories of the system.

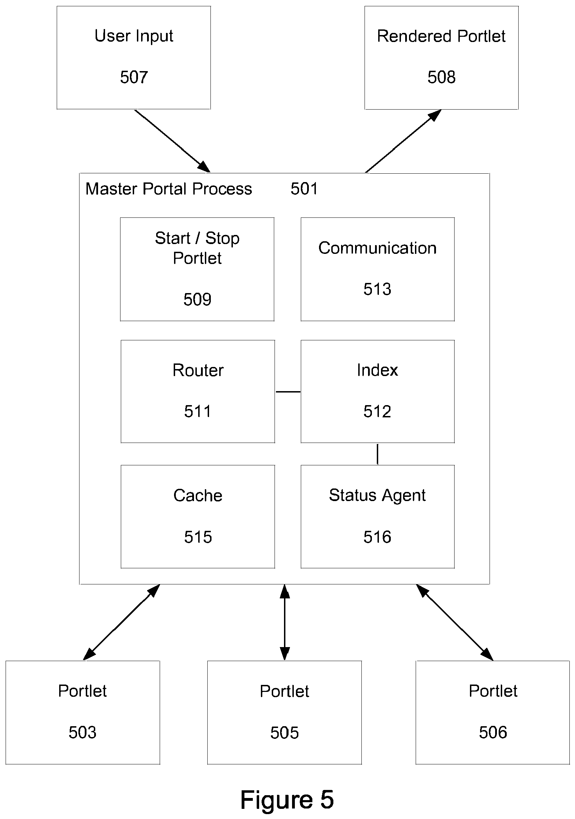

Figure 5 shows a system diagram of a master portal process of the system. A master portal process 501 (or portal or MPP) is associated with portlets (or modules) 503, 505, and 506. As discussed elsewhere in this application, the master portal process can execute in a sandbox. The master portal process 501 can manage portlets 503, 505, and 506 that may be executing on sandboxes. For example, one or more portlets can be executing in the same sandbox as the master portal process, one or more portlets can be executing on a sandbox separate from the master portal process, one or more portlets can be executing without a sandbox, or combinations of these. A single master portal process can support fewer (e.g., 1 or 2) or more (e.g., 4, 5, 6, or more) portlets.

The master portal process receives user input 507. User input can be any user input to a portal web page of the system, including user requests to the portlet (e.g., user request for information), user entry of information (e.g., keyboard input, mouse clicks, or other user interaction), or other input. User input to the master portal process can be referred to as part of an action phase of the portal web page. The master portal process outputs rendered portlets 508. This can be in response to user input 507. For example, based on user input 507, portlet 503 processes an input to create an updated display element for the portal web page. The updated display element generated by portlet 503 can be for only a portion of the portal web page corresponding to portlet 503. Portlet 503 transmits this updated display element to the master portal process, who performs further processing to determine an updated portal web page. The updated portal web page can include updated display elements from one or more portlets. Rendering portlets can be referred to as part of a render phase of the portal web page.

In an implementation, a portal web page of the system is accessed by one or more users. The user connections can be synchronous or asynchronous connections with respect to each other. Each portlet of the portal web page can support one or more users. Each user can view their version of the portal web page, and make requests to the master portal process at the same or different times with respect to the other users. These requests can prompt the system to create a newly rendered (or updated) portlet (or portal web page), depending on the type of portlet the request is sent to. In an implementation, a request sent by a first user to the portal web page causes an updated rendered portal web page to be shown to a second user. For example, if the first user's request is to modify a file stored on a document collaboration portlet, this change is reflected in the portal web page to the first and a second users.

In another implementation, a request from a first user to the portal web page does not cause an updated portal web page for a second user. For example, if the first user's request is to make a company directory search on a directory portlet, a newly rendered portlet (with the search results) can be transmitted to the first user, but the display of a second user is not updated for the second portlet.

Various modules executing as part of the master portal process are shown. A start/stop module 509 controls what portlets associated with master portal process 501 are executing. If a new portlet is necessary, module 509 can allocate resources and automatically spawn a new portlet or a new instance of an already executing portlet. Optionally, this module can terminate JVMs or portlets when the particular portlet is no longer needed. For example, if a portlet has failed (e.g., an error has occured), become depreciated, redundant, or will not be used by a user (e.g., for a given amount of the time, user has signed off, or for other reasons), the master portal process can terminate the portlet. In the situation where the portlet or sandbox has become terminated because of an error, the start/stop module can start another instance of the sandbox and execute portlets that were previously executing on the terminated sandbox. For example, if a portlet A becomes unresponsive, a sandbox containing portlet A is terminated. A new sandbox containing portlet A is started. If other portlets other than portlet A were executing on the terminated sandbox, these portlets are restarted as well (e.g., portlet B is restarted, portlets B and C are restarted, or other).

A router module 511 is used to determine what commands or requests are sent to which portlet. This module determines based on a user's request which portlet the request should be transferred for execution. In an implementation, for each request by users of the system, the request includes a portlet identifier. The portlet identifier uniquely identifies a portlet a user was interacting with when they made their request. At the router module, the system uses this portlet identifier to determine which portlet managed by a master portal process the request refers. This includes information on where the portlet is executing. For example, the system can perform a lookup of an index 512 (using a database, directory, table, list, linked data structure, or other format) to retrieve where the portlet's code is executing (e.g., which sandbox, which computer, which server, or other location information).

A communication module 513 is used to transmit information between the master portal process 501 and its respective portlets (e.g., portlets 503, 505, or 506). For example, if a user interacts with portlet 503, the master portal process 501 receives this interaction and determines that the interaction is associated with portlet 503. The master portal process receives needed information for the portlet to execute the request and determines any additional information necessary, and transmits this information to portlet 503 using communication module 513.

A cache module 515 is used by the system to store and prepare information for transfer to portlets. This module can reduce overhead and conserve bandwidth in the overall system. For example, information can be temporarily stored here, before transmission to a portlet. This can conserve computing resources and memory at a portlet location.

A status agent 516 is used by the system to determine whether an error has occurred with portlets associated with the master portal process. This module can use a variety of methods to detect erroneous operation at a given portlet. For example, the status agent 516 can use index 512. The index includes additional information that assists the system in determining whether an error has occurred with a managed portlet. Some information the index may include are configuration settings for managed portlets or resources allocated to a specific sandbox. Using this information, the system can determine whether a portlet has exceeded normal operation parameters (e.g., consumed too many resources, exceeded too many timeouts for being nonresponsive, or other). A nonexhaustive list of methods the system can use to detect an error include:
(1) A master portal process of the system maintains a heartbeat connection with its associated portlets. Once the heartbeat connection fails (e.g., a specific portlet does not indicate a status of normal operation), the system can indicate to the user that the portlet is unresponsive.
   In an implementation, this can mean that portlets are configured to send indications of normal operation according to a defined time period (e.g., 50 milliseconds, 100 milliseconds, 150 milliseconds, 200 milliseconds, 500 milliseconds, 1 second, 5 seconds, 20 seconds, 30 seconds, or greater). Each portlet managed by the master portal process can have its own defined time period. If a portlet has not sent indications or responded within the defined time, the master portal process determines the portlet has hung or is otherwise operating irregularly.
   In another implementation, the master portal process pings portlets that it is managing. This can be done according to a predetermined time interval. If a particular portlet does not respond (e.g., send an acknowledgement) to the master portal process within a given time, the master portal process will determine an error has occurred at the portlet. Optionally, after a predetermined number of unresponsive requests or time since a normal operation status has been reported, the system can perform additional remedial actions for the portlet or sandbox, as discussed in greater detail elsewhere in this application.
(2) A master portal process queries sandboxes or virtual machines hosting portlets. This can include accessing a sandbox's self-reported status (e.g., through the virtual machine's status console) or through a module executing on the sandbox. The module executing on the sandbox monitors the sandbox's responsiveness.
(3) A master portal process receives an error message generated by a portlet, indicating an error has occurred.
(4) A master portal process determines an estimated time for a portlet to execute a user's request. If the portlet exceeds the estimated time to generate a response to the user's request, the master portal process will indicate the portlet is not operating regularly.
(5) Or any combination of the above methods.

A portlet that has become unresponsive can mean a variety of things. This can mean that the sandbox (e.g., the software sandbox, physical computer, or other component) has either been improperly configured or is failing (e.g., memory failure) or there is an issue with the portlet itself. For example, a portlet can become unresponsive because it contains poorly written code (e.g., not optimized for performance, contains infinite loops, or other errors) or it is accessing excessive resources (e.g., using too many CPU cycles of a computer, used too much memory of its host machine, indexed memory that is out-of-bounds). An example of excessive utilization of resources include using excessive amounts of a computing resource, memory resource (e.g., excessive memory utilization), network resource, or disk resource. As discussed in greater detail elsewhere in this application, some examples of an excessive utilization of a resource can mean that a portlet (or sandbox) has become unresponsive or that a portlet (or sandbox) is consuming more of the resource than specified by a system administrator.

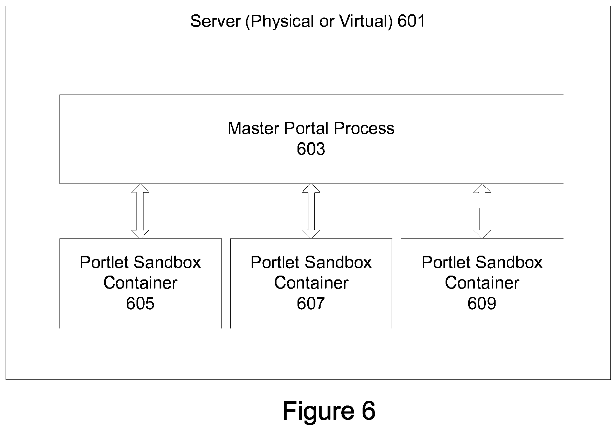

Figure 6 shows an example computer, such as a server 601, that can host the system. This server is can a single computer or can be a virtualized server. A virtualized server can be implemented on one or more computers and each virtualized server can host one or more portals. For example, figure 6 shows one master portal process 603 executing on server 601. The master portal process 603 is connected to portlet sandbox containers 605, 607, and 609. A portlet is software component for use with a portal. For example, a portlet can include one or more of the following elements: user interface elements, executable code, links to data sources, and other elements. Portlets are server side (e.g., separate from clients of the system) components that typically execute from within one or more application servers. Unlike client side widgets (e.g. desktop, browser, and others), portlets can receive, process, and transmit requests and results from multiple users (e.g., two, three, four, five, six, ten, one hundred, or other numbers of users) simultaneously.

Portlets can be implemented as swappable portlets, which means that a portal does not need to be shut down or stopped when a portlet is added or removed from the portal page. The system can accommodate more or fewer portlet sandbox containers (e.g., 1, 2, 4, 6, or more portlet sandbox containers) than the three shown in this figure.

Portlet applications, like servlet applications, are defined by a Java standard which various portal server vendors have implemented. The Java standard defines the portlet specification. A JSR-168 or JSR-286 standard portlet should be deployable on any portlet container which supports those standards. Portlets are placed on the page in a certain order by the end user and are served up dynamically by the portal server. Other languages can also be used to create protlets (e.g., C, C++, JavaScript, Perl, PHP, or other languages). Portlet can be stored in a bytecode format or other format that is executable by a sandbox. For example, a Java virtual machine can execute Java bytecode.

A portal platform can have multiple features that make them appropriate for a wide array of web applications. Some common uses for a portal include: (a) web sites that present different pages depending on a user's login (e.g., whether the user is logged in); (b) web sites that present different depending on the user's role (e.g., role as a customer, employee, or partner); (c) web sites that integrate multiple existing web application (e.g., ERP portal has product alerts, inventory, and sales applications); and (e) web sites that allow groups of individuals to collaborate through applications, on content, or with documents.

Portals make it easy to build web sites that show different content depending on whether or not the person is logged in. For example, a bank website may feature a set of pages describing its services, special offers, and contact information that are accessible to all; however, after a customer login, additional content may be available such as account information, bill payment, loans, and so forth.

Portals additionally simplify the development of web sites that display different data depending on a user's role. For instance, a bank website may feature anonymous and authenticated (logged-in) pages but can additionally have different pages available for various customer types. A standard account can have basic services and pages, while business customers can have additional pages defined.

In addition, portals allow end-users to define pages, and add content to their pages using predefined portlets or gadgets. They can also define who can access their pages. Team members can then collaborate together within their community site.

A portal platform has tools making it easier for users to build web pages and web sites by assembling portlets or gadgets onto a portal page. Portal web sites combine a theme (e.g., header/footer and common look and feel), a set of pages, navigation (e.g., menu bar), and a set of portlets and gadgets. Administrators can build pages without coding by reusing existing portlets and gadgets.

Portals can include a range of functionality and a single portal can include one or more of the functions described following:

*Web Platform.* A portal is generally a software platform for building web sites and web applications. Using such a platform, a portal administrator can manage one or more web sites of an organization. In addition to managing external web sites, the portal platform can manage intranets and extranets.

A portal platform can have multiple features that make them appropriate for a wide array of web applications. Some common uses for a portal include: (a) web sites that present different pages depending on a user's login (e.g., whether the user is logged in); (b) web sites that present different depending on the user's role (e.g., role as a customer, employee, or partner); (c) web sites that integrate multiple existing web application (e.g., ERP portal has product alerts, inventory, and sales applications); and (e) web sites that allow groups of individuals to collaborate through applications, on content, or with documents.

A portal platform has tools making it easier for users to build web pages and web sites by assembling portlets or gadgets onto a portal page. Portal web sites combine a theme (e.g., header or footer, or both, and common look and feel), a set of pages, navigation (e.g., menu bar), and a set of portlets and gadgets. Administrators can build pages without coding by reusing existing portlets and gadgets.

Portals make it easy to build web sites that show different content depending on whether or not the person is logged in. For example, a bank website may feature a set of pages describing its services, special offers, and contact information that are accessible to all; however, after a customer login, additional content may be available such as account information, bill payment, loans, and so forth.

Portals additionally simplify the development of web sites that display different data depending on a user's role. For instance, a bank website may feature anonymous and authenticated (logged-in) pages but can additionally have different pages available for various customer types. A standard account can have basic services and pages, while business customers can have additional pages defined.

In addition, portals allow end-users to define pages, and add content to their pages using predefined portlets or gadgets. They can also define who can access their pages. Team members can then collaborate together within their community site.

Once it is developed, a web site may be made available in multiple languages and from multiple platforms (e.g., smartphones, tablets, other computing devices). The portal platform provides a method to simplify the development and management of pages for each type of end-user.

*Web Content Management System.* A portal can include a full workflow enabled web content management system. Many portal web sites include a great deal of content that requires regular updates. These updates are often accomplished by nontechnical content contributors and need to be approved by content approvers in a workflow approval process.

Portals with web content management can additionally have a workflow approval process to allow some people to edit content, which is approved by others before being published. For example, a web site having an advertisement on the side of the page could add content via a user interface (UI) editor. If changes to the advertisement are desired, a portal content contributor can log in, make the edit, and save the changes. If the individual is not approved to publish content changes without review, the system will route the update to a content approver.

Portals can also serve as a repository for documents. Similar to content, documents can be added to the repository and made available through the web interface or web site. For example, individuals can publish documents into a central repository and have them be made available to portal users in a central library upon their login.

*Integration Platform.* Portals can integrate various existing applications into a single unified user experience. Portals enabled enterprises to pull together information and applications into one web site where users based on role would have quick access to all content specific to their role.

Enterprises often have a very large number of web sites and web applications that individual users regularly access. One method to improve the user experience and improve overall user productivity is to aggregate these various existing websites and applications into a single portal.

Integrations may also include external systems. Enterprise resource planning (ERP) systems can be integrated into a portal dashboard, showing status and alerts. Rather than link to each system, a portal would include one or more portlets showing data from the back-end system.

Additionally, portals can integrate various web sites into a single unified website. For example, an enterprise may have an anonymous website, customer website, partner website, and an employee website.

*Collaborative Platform.* Portals also allow the development of collaborative websites for teams and an entire enterprise.

*Team Collaboration.* The portal ability to allow individuals to create their own communities empowers teams to create a web area and assign a set of collaborative tools (e.g., blog, wiki, calendar, tasks, alerts, doc sharing) to the group. An individual can create or join one or more communities and organize all collaboration within that community.

*Organizational Collaboration.* Portals are also capable of supporting an entire enterprise for collaboration. As various collaboration tools are implemented, they can be made available to teams through the portal's modular design capability (e.g., add an additional portlet to the system and make available to community owners). As teams collaborate, they input a wide range of resources that can be leveraged by other teams throughout the enterprise.

*Social Collaboration.* Although teams can be formed by formal organizational roles, they can also be formed by informal roles. Portals enable these teams to join together. For example, a team of experts in various areas of a company can "friend" each other and track various projects they are working on individually. Furthermore, they can come together and form their own ad hoc community for a specific project. Social features such as social equity, rating, friending, presence, internal messaging, and friend activity walls allow these informal teams to easily collaborate.

*Social Platform.* A portal platform provides tools for building web applications, web sites, and portals, but it can additionally be used for a new category of web applications called "social applications." A social application is a web application that additionally leverages social identity, data, and features or services.

Portal applications generally come in two flavors: (1) multiple portlets which only provide small amounts of functionality individually, but are aggregated by the portal server into a larger application, or (2) whole applications which reside in only one application window. The choice is up to the application designers. This means that developers have to worry about what happens inside the portlet itself. The portal server handles building out the page as it is presented to users.

Portlets are not difficult to build, and Java standard portlets can be written by any Java developer with experience in writing web applications. The system can include a plugins software development kit that assists designing new portlet projects, as well as a development environment based on Eclipse.

In an implementation, the system uses sandboxing. This means that the system provides a protected, limited environment where portlets are controlled by a master portal process. This is different than other sandboxing techniques that operate at an operating system level of a computer. For these portlets, damage due to errors or failures of a portlet does not cause failure of the entire master portal process. This can be accomplished in the system, for example, through the use of Java virtual machines executing Java based portlets. A virtual machine is a software implemented machine that abstracts away details of underlying hardware or operating system the virtual machine is executing on. The system can include a master portal process executing a Java runtime environment. The master portal process can spinup or spindown Java virtual machines, with one or more instances of different virtual machines hosting one or more portlets. In other implementations, the system supports portlets developed using other programming frameworks, such as .NET, python, or other programming frameworks. The system can be setup and executed as explained in the sample flow below:
(1) User starts up a virtual machine (e.g., JVM, .NET, or other virtual machines) containing system code.
(2) User deploys custom modules (e.g., portlets) to be hosted by the system.
(3) User or system creates sandboxes and designate which modules will execute in each sandbox. The user can be provided with a user interface to do this.
(4) System administration module launches virtual machines that contain the designated modules.
(5) When there is a request at a portal for a specific module, the system will route the request to its corresponding module and location (e.g., which virtual machine contains which module).

In an implementation, the master portal process is associated with a Java Virtual Machine (or JVM) that hosts the portal and core portal services. For example, the JVM can support the Java Portlet specification (e.g., JSR168 or JSR286). In another implementation, the master portal process supports portlets compatible with portlets written in other programming languages other than Java, such as .NET, or Ruby. The master portal process can receives user requests and provides the rendered information to users.

Portlet sandbox containers 605, 607, and 609 are additional process that host specific portlets. These portlet sandbox containers can also be associated with virtual machines, such as Java Virtual Machines (e.g., separately executing JVMs) or other sandboxing techniques as discussed in this application. For example, sandboxed portlets can execute within a virtual machine executing and each virtual machine can contain one or more portlet sandboxes. These portlet sandbox containers can communicate with and execute portlet requests from the master portal process 603. These portlet sandbox containers can be prevented from receiving requests directly from users, if a request is not transferred from the master portal process. For example, this can include portlet requests, HTTP requests, or web services requests. A portlet can have multiple phases, such as resource phase, render phase, event phase, and action phase. The system is capable of sandboxing a portlet at any of these phases. For example, in an action phase on a portal web page, requests or actions from a user are received. An action (or request) can be invoked for one portlet at a time. In this phase the portlet can change its status, for instance changing the user preferences of the portlet, updating information stored with the portlet, or other activities. Any inserts and modifications in the database or operations can be performed in this phase. This allows the system to perform the action only once, as opposed to multiple times, that may occur if executed with other phases. In a render phase on a portal web page, the action has occurred and the system is updated. This can mean that the system is re-rendering (or processing) information and is updating displays for the portlet. In another implementation, at least one portlet of the system is not executing on a sandbox. This can be helpful when integrating the system with portal systems that do not support sandboxed portals or situations where a system administrator has confidence in the portlet code so as to not worry about instability or error with the portlet.

In an implementation, a master portal process of the system executes in a sandbox. This sandbox can include portlets. For example, the sandbox where the master portal process executes can include one or portlets. In another implementation, the system includes a sandbox with one or more portlets without a master portal process. This means that a master portal process, associated with the sandbox, manages the sandbox. The master portal process can be executing separately from the sandbox. These methods allow administrators more flexibility in how and where to store portlets, to adjust for portlet reliability, speed, or other factors.

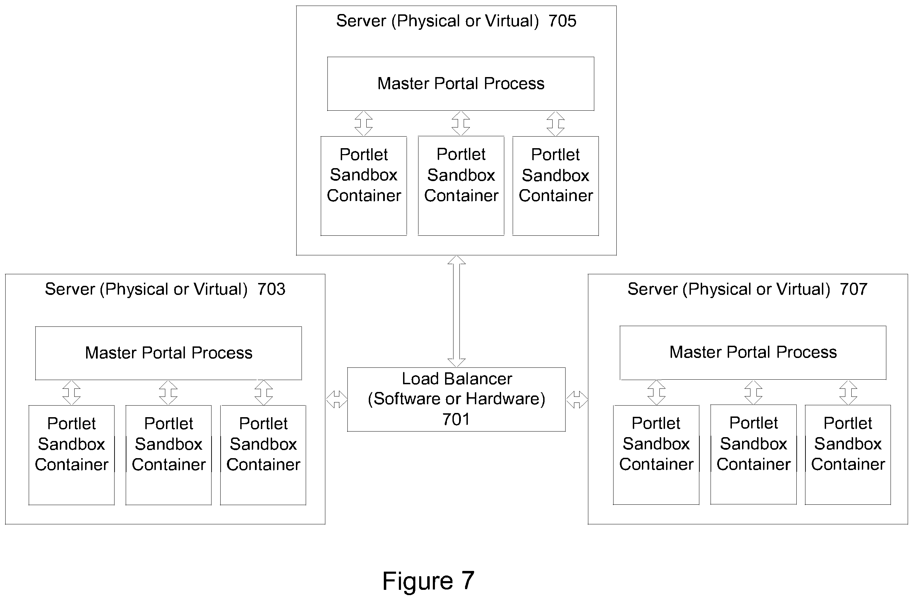

Figure 7 shows an implementation of the system deployed on multiple servers. For example, load balancer 701 is connected with arrows to represent that it is performing load balancing tasks for servers 703, 705, and 707. These servers can be similar to the one shown in figure 4. The load balancer can determine which server (e.g., 703, 705, or 707) should receive a request or operation based on a preconfigured algorithm. The algorithm can be a scheduling algorithm, such as round robin, load weighted, or other algorithms. The load balancer 701 can be implemented as a standalone hardware unit or software executing on a computer. The system can accommodate more or fewer servers for a load balancer than is shown in figure 7 (e.g., 1, 2, 4, 6, 7, 8, or more servers). The system can use the load balancer to allow administrators to configure load balancing between master portal processes. In an implementation, the load balancer is optional (e.g., an administrator can choose to provide load balancing functionality if the amount of end user requests exceeds what a single master portal process can manage).

In an implementation, systems with multiple servers have analogous portlets executing on each server. Taking figure 7 as an example, this means that if instances of portlets A, B, and C are executing on server 703, servers 705 and 707 will also be executing these portlets. This allows the system to have homogenous servers, which reduces overhead and complexity to determine where to apportion system load. For example, if a load balancer determines that server 705 has a low load when compared with servers 703 and 707, additional users or processing will be assigned for server 705.

In other implementations, systems with multiple servers have dissimilar portlets executing on each server. Taking figure 7 as an example, this means that if instances of portlets A, B, and C are executing on server 703, server 705 can be executing portlets A and B and server 707 is executing portlet D. This allows the system to be more flexible in determining which portlets to execute at each server, conserving computing resources.

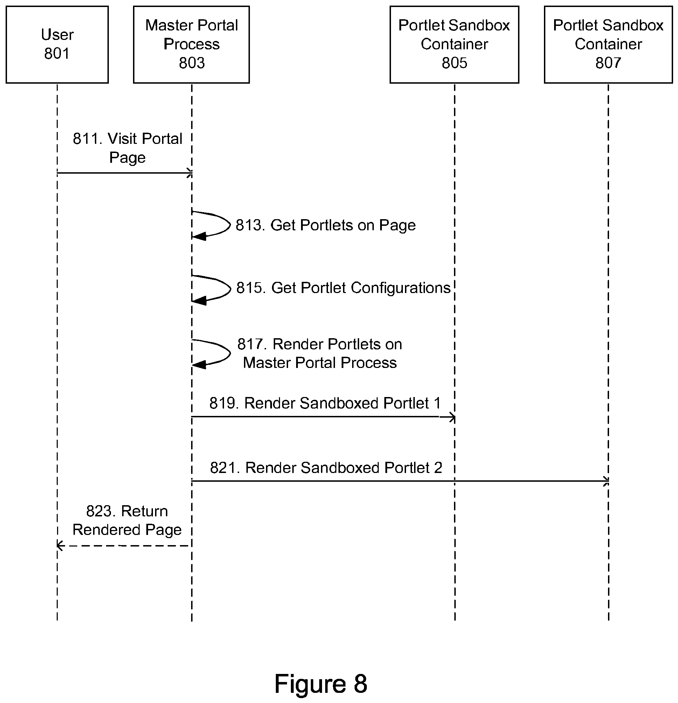

Figure 8 shows a flow of processing a user's request in the system. In this flow, four entities of the system are shown: user 801, master portal process (or MPP) 803, portlet sandbox container (or PSC) 805, and portlet sandbox container (or PSC) 807. However, more or fewer entities may be involved in the system that are not shown. In addition, there may be more than one of each of the entities shown. For example, the system can support more than one user, more than one master portal process, or more than one portlet sandbox container.

In a step 811, the user 801 accesses a portal by sending a request to a master portal process 803. For example, the user can access the portal by visiting a universal resource locator (or URL) such as www.mycompany.com/service. In a step 813, the master portal process receives the request and determines which portlets reside on the requested page. As discussed elsewhere, these can be third-party portlets, internally developed portlets, user administered portlets, administrator administered portlets, or more than one of these. In a step 815, the master portal process retrieves the configurations for the portlets which tells the master portal process whether a portlet resides on the master portal process or is sandboxed by a portal (e.g., whether the portlet is executing separate from the master portal process). In a step 815, the master portal process renders all portlets that have been configured to reside upon the master portal process. For example, this can include retrieving information, processing information, and receiving information to determine what information should be shown at a given portlet. In a step 817, the master portal process sends a request to the first portlet sandbox container. The first portlet sandbox container renders portlets assigned to that specific sandbox, or sandbox 1. In a step 819, the master portal process sends a request to a second portlet sandbox container, or sandbox 2. In a step 821, the master portal process gathers responses from portlets (e.g., steps 817, 819, 821) to generate a result for the user. The result to the user can be a single page, displaying the information from the portlets.

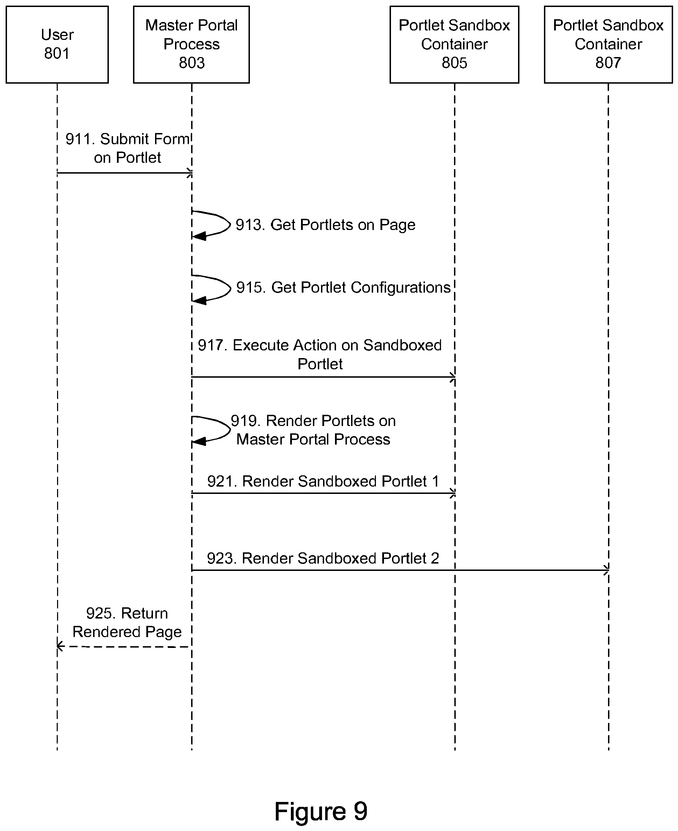

Figure 9 shows a flow of how a portal user's form submission is processed in the system. In a step 911, the user submits information on a portal. The user can interact with the portal page by clicking on the page interactive elements of the portal (e.g., menus, windows, buttons, hyperlinks, lists, boxes, or other interactive elements) or by entering information on their keyboard (e.g., textbox, forms, windows, or other).

In a step 913, a master portal process receives the request and determines which portlet should service the request based on information included with the request. In a step 915, the master portal process retrieves the configurations for the portlet which tells the master portal process whether the portlet resides on the master portal process or is sandboxed by a portal.

In a step 917, the master portal process sends the form submission action request to the first portlet sandbox container to process. This can be because it determined from the configurations that the portlet should handle the request has been sandboxed in the first portlet sandbox container. The portlet sandbox container processes the action request and returns to one or more results to the master portal process. In a step 919, the master portal process renders all portlets that have been configured to execute with the master portal process. In a step 921, the master portal process sends a request to a first portlet sandbox container to render portlets assigned to sandbox 1. In a step 923, the master portal process sends a request to the second portlet sandbox container to render portlets assigned to sandbox 2. In a step 925, the master portal process gathers responses from portlets (e.g., steps 919, 921, 923) and returns results to the user.

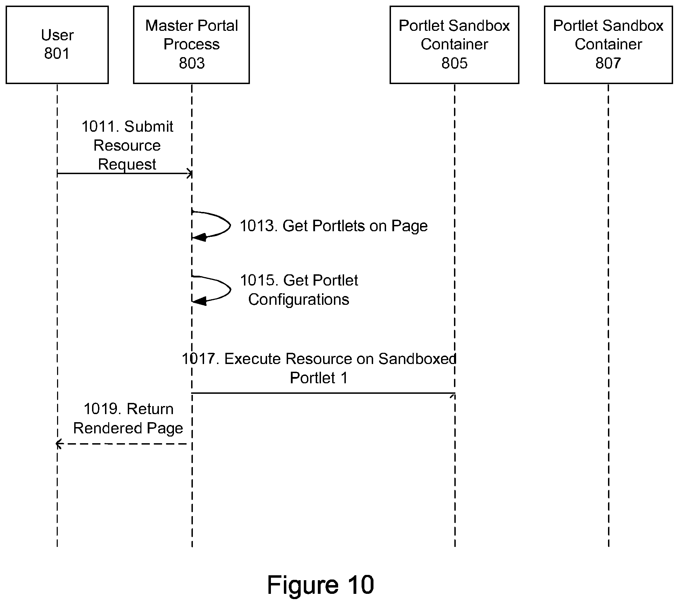

Figure 10 shows a flow of how a portal user's request for a resource will be processed in the system. In a step 1011, a user submits a request to retrieve a document (e.g., a file, Word document, portable document format document (e.g., Adobe PDF), picture, spreadsheet, or other file) on a portal. In a step 1013, a master portal process receives the request and determines which portlet should service the request. In a step 1015, the master portal process retrieves configurations for the portlet, which tells the master portal process whether the portlet resides on the master portal process or is sandboxed. In a step 1017, the master portal process sends the request (e.g., for resource retrieval) to the first portlet sandbox container to process. This can be because the configurations specify that the portlet associated with the request has been sandboxed in the first portlet sandbox container. In a step 1019, the master portal process returns the retrieved resource to the user.

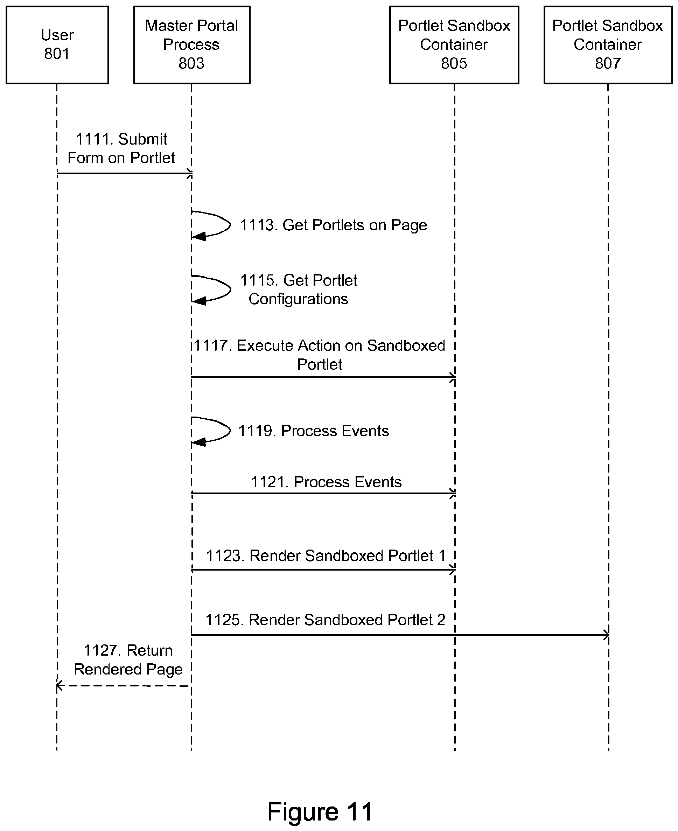

Figure 11 shows how a portal user's form submission can be processed in the system when portlets fire events. A portlet fires an event when it executes an event due to changes in the system (e.g., user input, sensor input, messages, communication from threads or other processes) as part of an event-driven programming. In a step 1111, a user submits a request (e.g., on a form) of a portal, which is transmitted to a master portal process.

In a step 1113, the master portal process receives the request and determines which portlet should service the request. In a step 1115, the master portal process retrieves configurations for the portlet which tells the master portal process whether the portlet resides on the master portal process or is sandboxed. In a step 1117, the master portal process sends the request to the first portlet sandbox container to process. This can be because the configurations specify that the portlet associated with the request has been sandboxed in the first portlet sandbox container. In a step 1119, the master portal process processes all event requests for portlets located on the master portal process.

In a step 1121, the master portal process determines that a portlet in the first portlet sandbox container needs to process an event and sends the event request to the first portlet sandbox container to complete. In a step 1123, the master portal process renders all portlets that have been configured to reside upon the master portal process. In a step 1125, the master portal process sends a request to the first portlet sandbox container to render portlets assigned to sandbox 1. The master portal process sends a request to a second portlet sandbox container to render portlets assigned to sandbox 2. The master portal process gathers responses from steps 1123 and 1125 and returns an assembled page to the user. In this example, a second portlet sandbox container receives an event, while the second portlet sandbox does not. The master portal process still receives rendered portal information from the first and second portlet sandbox containers, however.

In an implementation, the system includes a sandbox administration mode (or module). In this mode, the system allows a portal administrator to create, update, and delete sandbox definitions. Sandbox definitions can include various information on properties of portals running in each sandbox, such as what portlets will run within the sandbox, the amount of memory allocated for the sandbox process, and other relevant portal properties.

The sandbox administration mode can include functionality to monitor sandbox status. For example, each sandbox will have a communication channel between the sandbox administration module and itself, such as through providing heartbeats and other transmission methods. The administration module can include options to handle when a sandbox fails (or dies). In the event a sandbox dies, the sandbox administration module will attempt to triage the error. Triaging the error may include various operations such as notifying a portal administrator via e-mail, short message service message (or SMS), a Java management extension (or JMX) event, a simple network management protocol (or SNMP) event, restarting the sandbox process, or other recovery and diagnostic options.

This description of the invention has been presented for the purposes of illustration and description. It is not intended to be exhaustive or to limit the invention to the precise form described, and many modifications and variations are possible in light of the teaching above. The embodiments were chosen and described in order to best explain the principles of the invention and its practical applications. This description will enable others skilled in the art to best utilize and practice the invention in various embodiments and with various modifications as are suited to a particular use. The scope of the invention is defined by the following claims.

## Claims

1. A method comprising:
receiving (403) a request from a first user at a portal web page for a first portlet (503) managed by a master portal process (501);
at the master portal process (501), processing (405) the first user's request by determining that the first portlet (503) has been configured to execute on a first sandbox, and sending the first user's request at the first portlet (503) to the first sandbox for execution, wherein the first sandbox comprises an executable of the first portlet (503) that will execute the first user's request;
causing at the first sandbox containing the executable of the first portlet (503) to process the first user's request and return a result to the master portal process (501); and
at the master portal process (501), assembling a response for the first user's request including the result from the executable of the first portlet (503) at the first sandbox and returning the response to the first user.

2. The method of claim 1 comprising:
managing by the master portal process (501) the first portlet (503) and a second portlet (505),
wherein the second portlet (505) comprises an executable configured to execute on a second sandbox, separate from the first sandbox.

3. The method of claim 1 comprising:
managing by the master portal process (501) the first portlet (503) and a second portlet (505),
wherein the second portlet (505) comprises an executable configured to execute on the first sandbox.

4. The method of claims 1-3 wherein determining that the first portlet (503) has been configured to execute on the first sandbox comprises determining, based on the first user's request, that a first portlet identifier uniquely identifying the first portlet (503) relates to the first user's request.

5. The method of claims 1-4 wherein the first portlet (503) is a portlet managed by the master portal process (501).

6. The method of claims 1-5 comprising:
at the master portal process (501), monitoring execution of a second sandbox configured to execute the first portlet (503), wherein the monitoring is capable of detecting whether the first portlet (503) configured to execute on the second sandbox has been terminated due to an error.

7. The method of claim 6 wherein the error comprises failure of the first portlet (503).

8. The method of claim 6 wherein the error comprises excessive computing resource utilization of the first portlet (503).

9. The method of claim 6 wherein the error comprises unresponsiveness of the first portlet (503) beyond a certain time period.

10. The method of claim 6 wherein the first portlet (503) is determined to be redundant.

11. The method of claim 6 comprising:
detecting an error of the first portlet executing in the second sandbox;
upon detecting the error of the first portlet executing in the second sandbox, causing a termination of the second sandbox and launching the first sandbox, wherein the second sandbox is terminated without a termination of the master portal process (501), the second sandbox is different from the first sandbox, and the first sandbox comprises the first portlet (503).

12. The method of claims 1-11 wherein the first user's request relates to exactly one portlet of the portal web page.

13. The method of claim 1-12 wherein the master portal process (501) executes on a first computer separate from a second computer hosting the first sandbox.

14. The method of claim 1-13 comprising:
receiving another request from the first user at the portal web page for the first portlet (503) managed by a master portal process (501);
at the master portal process (501), processing the first user's other request by determining that the first portlet (503) has been configured to execute on the first sandbox, and sending the first user's other request at the first portlet (503) to the first sandbox for execution;
causing at the first sandbox containing the executable of the first portlet (503) to process the first user's other request and return another result to the master portal process (501); and
at the master portal process (501), assembling an updated response for the first user's other request including the other result from the executable of the first portlet (503) at the first sandbox and returning the updated response to the first user.

15. The method of claim 1-14 wherein the executable of the first portlet (503) comprises a bytecode format.

## Patentansprüche

1. Verfahren, umfassend:
Empfangen (403) einer Anfrage von einem ersten Benutzer auf einer Portal-Webseite für ein erstes Portlet (503), das von einem Master-Portal-Prozess (501) verwaltet wird;
an dem Master-Portal-Prozess (501), Verarbeiten (405) der Anfrage des ersten Benutzers durch Bestimmen, dass das erste Portlet (503) konfiguriert wurde, um auf einer ersten Sandbox ausgeführt zu werden, und Senden der Anfrage des ersten Benutzers an dem ersten Portlet (503) an die erste Sandbox zur Ausführung, wobei die erste Sandbox eine ausführbare Datei des ersten Portlets (503) umfasst, die die Anfrage des ersten Benutzers ausführen wird;
Veranlassen an der ersten Sandbox, die die ausführbare Datei des ersten Portlets (503) enthält, die Anfrage des ersten Benutzers zu verarbeiten und ein Ergebnis an den Master-Portal-Prozess (501) zurückzugeben; und
an dem Master-Portal-Prozess (501), Zusammenstellen einer Antwort für die Anfrage des ersten Benutzers, die das Resultat aus der ausführbaren Datei des ersten Portlets (503) in der ersten Sandbox beinhaltet und Zurückgeben der Antwort an den ersten Benutzer.

2. Verfahren gemäß Anspruch 1, umfassend:
Verwalten des ersten Portlets (503) und eines zweiten Portlets (505) durch den Master-Portal-Prozess (501),
wobei das zweite Portlet (505) eine ausführbare Datei umfasst, die konfiguriert ist, um auf einer zweiten Sandbox, separat von der ersten Sandbox, auszuführen.

3. Verfahren gemäß Anspruch 1, umfassend:
Verwalten des ersten Portlets (503) und eines zweiten Portlets (505) durch den Master-Portal-Prozess (501),
wobei das zweite Portlet (505) eine ausführbare Datei umfasst, die konfiguriert ist, um auf der ersten Sandbox ausgeführt zu werden.

4. Verfahren gemäß den Ansprüchen 1-3, wobei ein Bestimmen, dass das erste Portlet (503) konfiguriert wurde, um auf der ersten Sandbox ausgeführt zu werden, ein Bestimmen, basierend auf der Anfrage des ersten Benutzers, umfasst, dass eine erste Portlet-Kennung, die das erste Portlet (503) eindeutig identifiziert, sich auf die Anfrage des ersten Benutzers bezieht.

5. Verfahren gemäß den Ansprüchen 1-4, wobei das erste Portlet (503) ein Portlet ist, das durch den Master-Portal-Prozess (501) verwaltet wird.

6. Verfahren gemäß den Ansprüchen 1-5, umfassend:
an dem Master-Portal-Prozess (501), Überwachen einer Ausführung einer zweiten Sandbox, die konfiguriert ist, um das erste Portlet (503) auszuführen, wobei das Überwachen in der Lage ist, zu erfassen, ob das erste Portlet (503), das konfiguriert ist, um auf der zweiten Sandbox auszuführen, aufgrund eines Fehlers beendet wurde.

7. Verfahren gemäß Anspruch 6, wobei der Fehler ein Versagen des ersten Portlets (503) umfasst.

8. Verfahren gemäß Anspruch 6, wobei der Fehler eine übermäßige Verwendung der Rechenressourcen des ersten Portlets (503) umfasst.

9. Verfahren gemäß Anspruch 6, wobei der Fehler eine Inaktivität des ersten Portlets (503) über einen bestimmten Zeitraum hinaus umfasst.

10. Verfahren gemäß Anspruch 6, wobei das erste Portlet (503) als redundant bestimmt wird.

11. Verfahren gemäß Anspruch 6, umfassend:
Erfassen eines Fehlers des ersten Portlets beim Ausführen in der zweiten Sandbox;
bei Erfassen des Fehlers der Ausführung des ersten Portlets in der zweiten Sandbox, Veranlassen einer Beendigung der zweiten Sandbox und Starten der ersten Sandbox, wobei die zweite Sandbox ohne eine Beendigung des Master-Portal-Prozesses (501) beendet wird, die zweite Sandbox sich von der ersten Sandbox unterscheidet und die erste Sandbox das erste Portlet (503) umfasst.

12. Verfahren gemäß den Ansprüchen 1-11, wobei sich die Anfrage des ersten Benutzers auf genau ein Portlet der Portal-Webseite bezieht.

13. Verfahren gemäß Anspruch 1-12, wobei der Master-Portal-Prozess (501) auf einem ersten Computer ausgeführt wird, der separat von einem zweiten Computer ist, der die erste Sandbox hostet.

14. Verfahren gemäß Anspruch 1-13, umfassend:
Empfang einer weiteren Anfrage des ersten Benutzers an der Portal-Webseite für das erste Portlet (503), das von einem Master-Portal-Prozess (501) verwaltet wird;
an dem Master-Portal-Prozess (501), Verarbeiten der weiteren Anfrage des ersten Benutzers durch Bestimmen, dass das erste Portlet (503) zum Ausführen auf der ersten Sandbox konfiguriert wurde, und Senden der weiteren Anfrage des ersten Benutzers an dem ersten Portlet (503) an die erste Sandbox zur Ausführung;
Veranlassen an der ersten Sandbox, die die ausführbare Datei des ersten Portlets (503) enthält, die weitere Anfrage des ersten Benutzers zu verarbeiten und ein weiteres Ergebnis an den Master-Portal-Prozess (501) zurückzugeben; und
an dem Master-Portal-Prozess (501), Zusammenstellen einer aktualisierten Antwort für die weitere Anfrage des ersten Benutzers, die das weitere Resultat aus der ausführbaren Datei des ersten Portlets (503) an der ersten Sandbox beinhaltet, und Zurückgeben der aktualisierten Antwort an den ersten Benutzer.

15. Verfahren gemäß Anspruch 1-14, wobei die ausführbare Datei des ersten Portlets (503) ein Bytecode-Format umfasst.

## Revendications

1. Un procédé comprenant :
la réception (403) d'une demande d'un premier utilisateur sur une page web de portail pour un premier portlet (503) géré par un processus de portail maître (501) ;
au processus de portail maître (501), le traitement (405) de la demande du premier utilisateur en déterminant que le premier portlet (503) a été configuré pour s'exécuter sur un premier bac à sable, et l'envoi de la demande du premier utilisateur au premier portlet (503) vers le premier bac à sable pour exécution, dans lequel le premier bac à sable comprend un exécutable du premier portlet (503) qui exécutera la demande du premier utilisateur ;
le fait d'amener au premier bac à sable contenant l'exécutable du premier portlet (503) à traiter la demande du premier utilisateur et à renvoyer un résultat vers le processus de portail maître (501) ; et
au processus de portail maître (501), l'assemblage d'une réponse pour la demande du premier utilisateur, y compris le résultat à partir de l'exécutable du premier portlet (503) au premier bac à sable et le renvoi de la réponse vers le premier utilisateur.

2. Le procédé selon la revendication 1 comprenant :
la gestion par le processus de portail maître (501) du premier portlet (503) et d'un deuxième portlet (505),
dans lequel le deuxième portlet (505) comprend un exécutable configuré pour s'exécuter sur un deuxième bac à sable, distinct du premier bac à sable.

3. Le procédé selon la revendication 1 comprenant :
la gestion par le processus de portail maître (501) du premier portlet (503) et d'un deuxième portlet (505),
dans lequel le deuxième portlet (505) comprend un exécutable configuré pour s'exécuter sur le premier bac à sable.

4. Le procédé selon les revendications 1 à 3 dans lequel la détermination que le premier portlet (503) a été configuré pour s'exécuter sur le premier bac à sable comprend la détermination, sur la base de la demande du premier utilisateur, qu'un premier identificateur de portlet identifiant de manière unique le premier portlet (503) se rapporte à la demande du premier utilisateur.

5. Le procédé selon les revendications 1 à 4 dans lequel le premier portlet (503) est un portlet géré par le processus de portail maître (501).

6. Le procédé selon les revendications 1 à 5 comprenant :
au processus de portail maître (501), la surveillance de l'exécution d'un deuxième bac à sable configuré pour exécuter le premier portlet (503), dans lequel la surveillance est capable de détecter si le premier portlet (503) configuré pour s'exécuter sur le deuxième bac à sable a été interrompu en raison d'une erreur.

7. Le procédé selon la revendication 6 dans lequel l'erreur comprend l'échec du premier portlet (503).

8. Le procédé selon la revendication 6 dans lequel l'erreur comprend une utilisation excessive de ressource informatique du premier portlet (503).

9. Le procédé selon la revendication 6 dans lequel l'erreur comprend l'absence de réponse du premier portlet (503) au-delà d'une certaine période de temps.

10. Le procédé selon la revendication 6 dans lequel le premier portlet (503) est déterminé comme étant redondant.

11. Le procédé selon la revendication 6 comprenant :
la détection d'une erreur du premier portlet s'exécutant dans le deuxième bac à sable ;
lors de la détection de l'erreur du premier portlet s'exécutant dans le deuxième bac à sable, le fait de provoquer une interruption du deuxième bac à sable et le lancement du premier bac à sable, dans lequel le deuxième bac à sable est interrompu sans une interruption du processus de portail maître (501), le deuxième bac à sable est différent du premier bac à sable, et le premier bac à sable comprend le premier portlet (503).

12. Le procédé selon les revendications 1 à 11 dans lequel la demande du premier utilisateur se rapporte à exactement un portlet de la page web de portail.

13. Le procédé selon les revendications 1 à 12 dans lequel le processus de portail maître (501) s'exécute sur un premier ordinateur distinct d'un deuxième ordinateur hébergeant le premier bac à sable.

14. Le procédé selon les revendications 1 à 13 comprenant :
la réception d'une autre demande du premier utilisateur sur la page web de portail pour le premier portlet (503) géré par un processus de portail maître (501) ;
au processus de portail maître (501), le traitement de l'autre demande du premier utilisateur en déterminant que le premier portlet (503) a été configuré pour s'exécuter sur le premier bac à sable, et l'envoi de l'autre demande du premier utilisateur au premier portlet (503) vers le premier bac à sable pour exécution ;
le fait d'amener au premier bac à sable contenant l'exécutable du premier portlet (503) à traiter l'autre demande du premier utilisateur et à renvoyer un autre résultat vers le processus de portail maître (501) ; et
au processus de portail maître (501), l'assemblage d'une réponse mise à jour pour l'autre demande du premier utilisateur, y compris l'autre résultat à partir de l'exécutable du premier portlet (503) au premier bac à sable et le renvoi de la réponse mise à jour vers le premier utilisateur.

15. Le procédé selon les revendications 1 à 14 dans lequel l'exécutable du premier portlet (503) comprend un format de code à octets.
